# EUROPEAN PATENT APPLICATION

(11) **EP 2 290 907 A1**
(43) Date of publication of application: **02.03.2011**
(21) Application number: 09305781.8
(22) Date of filing: 24.08.2009
(51) Int. Cl.: H04L 29/08

(54) **USSD enabled mobile tracking**

(71) Applicant: Alcatel Lucent, 75008 Paris (FR)
(72) Inventor: Dabas, Aniket, 110070 New Delhi (IN); Kumar Gupta, Pushpak, 122016 Gurgaon Haryana (IN)
(74) Representative: Hedarchet, Stéphane

(57) **Abstract**

USSD enabled mobile tracking. This invention relates to wireless communication, and more particularly to providing location based information in a device using wireless communication. Cellular devices provide location based information through GPRS services. Conventional methods use HTTP interface and GET and POST methods to provide location related information. When the user of the mobile device is not registered with roaming facility, he cannot access GPRS facility and hence the location based information is not updated on the web server. A method of obtaining location information in real time using GPS and USSD based location tracking is disclosed. The method employs an application on the mobile device, which reads the GPS data and transmits the data in the form of USSD string, which enables an authorized person to access the location information.

## Description

### FIELD OF INVENTION

This invention relates to wireless communication and, more particularly but not exclusively, to providing location information of a device using wireless communication.

### BACKGROUND

Location information can be obtained by the wireless network using one of the available location information gathering sources to identify the location of a person or an object. Location information can be obtained using triangulation, Global Positioning System (GPS) co-ordinates and so on. In triangulation, the position of a mobile device is tracked by measuring the strength of the signal received by the mobile device from atleast three mobile base stations. In GPS, the location of the mobile device is tracked using co-ordinates in terms of longitude and latitude received from a plurality of medium earth orbit satellites. The co-ordinates of the mobile device obtained using triangulation or GPS may be sent to a distant location and used to track the location of the mobile device.

Location information can be either triggered by the user of the mobile device or by some indication from the mobile network.

Some mechanisms employ the method of pushing location information from the mobile device to the mobile network through wireless communication networks. Such mechanisms depend on certain web based services.

Existing systems may also use General Packet Radio Service (GPRS) to communicate location information to a web server, which routes the information to the mobile network. In these systems, Hyper Text Transfer Protocol (HTTP) interface is used to update the location information of the tracked entity using GET or POST methods. POST is a type of HTTP request message that submits data to be processed to the identified resource. GET is a type of HTTP request message that requests a representation of the specified source. In case, the subscriber is not registered with roaming facility, he cannot access GPRS facility and hence the location information is not updated on the web server. Location information of the mobile device is stored in the VLR of a particular location. In addition, the VLR also stores information regarding services for which the subscribers have registered and so on. Hence, all the requests are routed to the Visitor Location Register (VLR) when the subscriber is on roaming. If the roaming service of the subscriber is not activated, location based information cannot be obtained from the VLR by the HLR. This is because, when the VLR sends a message to HLR to access information on location, VLR checks if that subscriber is registered for roaming. If he is not registered for roaming, HLR sends a message to VLR indicating that the subscriber is not registered for roaming service. The GPRS service is not available to the user as the user is not registered for roaming service. As a result, the location of the subscriber is not known when he is on roaming.

Another factor is the cost to the operator. When the subscriber is on roaming, rates to access GPRS service subscribed by him is higher. Thus, adds to the cost of the services for the operator. Also, the amount of resources required to service the subscriber's request is also high.

### SUMMARY

These and other aspects of the embodiments herein will be better appreciated and understood when considered in conjunction with the following description and the accompanying drawings.

A method for a mobile device to send tracking information to a mobile network is disclosed. The method comprising of the mobile device sending location information to mobile network using a signaling channel between the mobile device and mobile network. The mobile device uses or is interfaced with Global System for Mobile Communications (GSM). The signaling channel uses Unstructured Supplementary Service Data (USSD). The location information comprises of latitude of location of mobile device and longitude of location of mobile device.

A method for performing real-time tracking of a mobile device in telecommunication network. The method comprising steps of mobile device sending location information to a mobile network using a signaling channel between the mobile device and mobile network. Mobile network sending location information to a server, and a user accessing location information from the server. The mobile device uses Global System for Mobile Communications (GSM). Real-time communication means is Unstructured Supplementary Service Data (USSD and the server is an Intelligent Network (IN) server. User is authorized by user of the mobile device to access location information. User accesses location information using a web browser. The location information comprises of latitude of location of mobile device and longitude of location of mobile device.

A mobile device for sending location information to a mobile network, mobile device comprising of atleast one means adapted for sending location information to mobile network using a signaling channel between the mobile device and mobile network. The mobile device is adapted to use Unstructured Supplementary Service Data (USSD) to send location information.

A system for performing real-time tracking of a mobile device in a telecommunication network. The system comprising of atleast one means adapted for sending location information of mobile device to a mobile network using a signaling channel between the mobile device and mobile network. The system storing location information in a server and accessing location information from the server. The mobile device is adapted to use Unstructured Supplementary Service Data (USSD) to send location information.

### BRIEF DESCRIPTION OF THE FIGURES

Some embodiments of apparatus and/or methods in accordance with embodiments of the present invention are now described, by way of example only, and with reference to the accompanying drawings, in which:

FIG. 1 illustrates the system, according to embodiments as disclosed herein;

FIG. 2 illustrates the intelligent network (IN), according to embodiments as disclosed herein;

FIG. 3 is a flow diagram illustrating successful case of call flow between IN and web server, according to embodiments as disclosed herein;

FIG. 4 is a flow chart depicting the process of successful call flow between IN and web server, according to embodiments as disclosed herein;

FIG. 5 is a flow diagram illustrating time out call flow between IN and web server, according to embodiments as disclosed herein;

FIG. 6 is a flow chart depicting the process of time out call flow between IN and web server, according to embodiments as disclosed herein;

FIG. 7 is a flow diagram illustrating the sequence of events between the network and IN, according to embodiments as disclosed herein; and

FIG. 8 is a flow chart depicting sequence of events between network and IN, according to embodiments as disclosed herein.

### DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

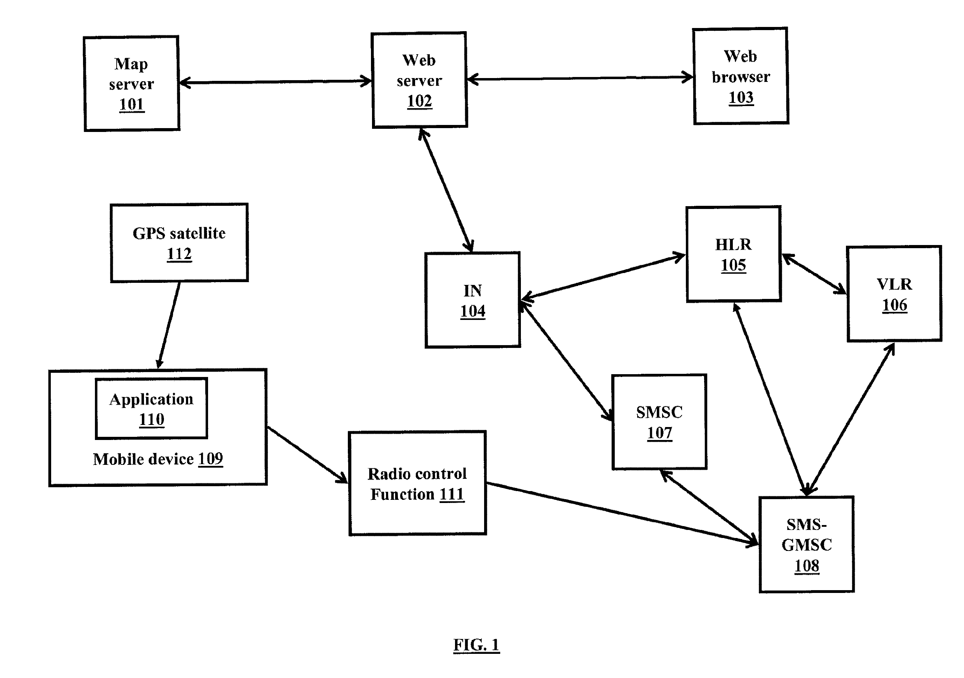

The embodiments herein achieve a method for adaptively obtaining location information of a mobile device in real time by using signaling channels between the mobile device and mobile network. In an embodiment, the signaling channel may use Unstructured Supplementary Service Data (USSD). Referring now to the drawings, and more particularly to FIGS. 1 through 8, where similar reference characters denote corresponding features consistently throughout the figures, there are shown embodiments.

A system and method of tracking of a mobile device in real time is disclosed. Real time location tracking service can be provided by different network operators. Operators can provide tracking service in the form of Value Added Services (VAS). A mobile device user, who wishes to use the tracking service, registers with the operator for the service. On registration, the mobile device user may be provided with a service code. Service code is used to identify subscribers for a service. In an example, the service code can be in the form of *555#, *12354777#, *678# and the like. The identification information may be sent in the USSD string. The mobile device may be provided with an application running on the mobile device. In an embodiment, the mobile device may be Global System for Mobile Communications (GSM) enabled. In an embodiment, the mobile device may be equipped with a GPS module present external to the mobile device and connected to the mobile device by means such as Bluetooth, infrared and the like.

User of the mobile device can authorize people who can access his location information. Details of persons authorized by the user of the mobile device for the location based tracking service are stored on an Intelligent Network (IN). Authorized persons can include people who are permitted to access the location information of the user of the mobile device. For example, the user of the mobile device can allow access of tracked location information to his parents, employer, and colleagues and so on.

A GPS device is continuously tracking the location of users of mobile device who register for the service, where the GPS device may be inbuilt into the mobile device or may be an external device and connected to the mobile device through any means of data transfer such as Bluetooth, infrared and the like. An application on the mobile phone reads the GPS data and transmits the data in the form of USSD string. The data is routed to IN through a HLR and a confirmation of the successful operation is sent to the mobile application. Tracked location information is present on the IN.

A person authorized by the user of the mobile device makes a request for the location information through a web server. The request is sent to the web server. The web server requests the data from the IN, which performs all the data collection and charging related operations.

FIG. 1 illustrates the system, according to embodiments as disclosed herein. The system depicts the components of a GSM network, that comprises mobile device 109, an application 110 on the mobile device 109, radio control function 111, Short Message Service Gateway Mobile Switching Center (SMS-GMSC) 108, Short Message Service Center (SMSC) 107, Intelligent Network (IN) 104, Home Location Register (HLR) 105, Visitor Location Register (VLR) 106, Web server 102, Map server 101, Web browser 103 and GPS satellites 112.

A plurality of GPS satellites 112 tracks the location of the mobile device. The location information may comprise of details such as the latitude, longitude, altitude, area and so on. The mobile device 109 may be provided with an application 110. The application may be configured to send location related data. Location data may be sent to the designated short code. The application 110 enables the user to set options with regards to the sending location data. In an example, the user may set options using the application 110 related to the rate at which data is sent, turning off location update information at any time. In an embodiment, the application 110 can be used by the user to set up preferences. For instance, at the time of registration the user can restrict people from accessing information about him or can provide access to only limited number of people and so on. In addition, the application 110 also takes care of authentication details of the user, stores details regarding location tracking and so on. In another embodiment, user of mobile device can be use a web site to set up preferences. For instance, the user can restrict people from accessing information about him or can provide access to only limited number of people and so on. In addition, the application 110 also takes care of authentication details of the user, stores details regarding location tracking and so on. Application 110 can be configured to carry out tracking in real time either continuously, at definite time intervals or on change in location of the mobile device. The mobile device 109 routes the location information to the radio control function 111.

The radio control function 111 is basically a network tower that handles all the transmissions of GSM network. The location information is transmitted from the mobile device 109 to the radio control function 111. The radio control function 111 transfers the location information to the appropriate SMS-GMSC 108.

The SMS-GMSC 108 receives the location information from the radio control function 111. The location information may be in the form of data related to area, map of the location, latitude, longitude and so on. The SMS-GMSC 108 acts as a gateway MSC, which can receive short messages. Short message is a message that may be sent through a signaling channel. Short message may contain location related information. Short messages can also include data regarding the location of the user of the mobile device, request message for some service and the like. The SMS-GMSC 108 is a mobile network's point of contact with other networks. The current position refers to the location of the user of the mobile device either in the home network region or roaming i.e. outside the home network region.

The location related information is then transferred to either HLR 105 or VLR 106 depending on whether the user of the mobile device is in home network region or roaming. In case the user of the mobile device is on roaming, the SMS-GMSC 108 contacts VLR 106. VLR 106 stores temporary information about the mobile identification and the cell module, where the mobile device is currently located. Using information from the VLR 106, the mobile device 109 is able to switch information to corresponding Base Station Subsystem (BSS). VLR 106 connects to other GSM elements such as HLR 105 to request the data for mobile devices attached to the serving area. Other VLR's 106 to transfer temporary data concerning the mobile device when roaming into new VLR areas.

On the other hand, if user of the mobile device is not on roaming, the SMS-GMSC 108 connects to HLR 105. HLR 105 is the main database in the mobile network. HLR 105 holds information about the subscription profile of the user of the mobile device and routing information of the data. HLR 105 stores details of every SIM card issued by mobile device operator in that particular circle of operation. The location related information is sent to HLR 105. HLR 105 then sends the location based information to the IN 104.

The location related information is sent to IN 104. In case of the IN 104, the intelligence is placed in the computer nodes that can be distributed throughout the network. IN 104 saves the transmitted data related to location information and sends a response message to the mobile application 110, indicating the successful completion of the process though the HLR. The response message may be in the forms of a short message.

Web browser 103 handles the requests of authorized persons. Web browsers may include Windows Internet Explorer, Mozilla Firefox, Google Chrome, Safari and the like. The authorized person who wants to access data regarding the location of user of a mobile device uses a web browser 103 to obtain the information. The authorized person makes a request for location data through the web browser 103. The request from the subscriber is sent by the web browser 103 to the web server 102. The web server 103 requests the IN 104 for data related to the location of the user of the mobile device.

The web server 102 handles requests from authorized persons. On obtaining the requests form authorized person, the web server 102 sends the request to the IN 104 for the location information requested by authorized person. For each XML post by IN 104 containing the data, web server 102 sends an acknowledgment back to the IN 104. Mostly all the management like changing access rights etc. is done through a web site. On the web site, an account with user name and password is used to authenticate user.

In another embodiment, the data related to the location is sent to the web server 102 only when authorized person requesting for data is online, and data is required to be displayed on real time. In real time transmission of data, XML request is sent by the web server 102 to the IN 104. In response a flag is set on the IN 104, which indicates the subscriber is online and data is required in real time.

The map server 101 provides maps of the requested location to the web server 102. In an embodiment, the location information may be superimposed on the map provided by the map server 101 and sent to the authorized person to provide a visual display of the location. In some cases, all the requests may be directly catered by a map server 101 and the web site controls all the options by use of functions provided by the map server 101 in its code. For example, the location data and map of the location may be sent to the web server 102 separately. Both the information may then be integrated on the web server 102 to provide a display of the map along with the information details of the location. A live feed of the information may be sent to the web browser 103 providing an interactive way to handle and display the data to the authorized person.

The SMSC 107 is a network element in the mobile device network, which delivers short service messages. Short messages contain information of changes desired by the user and may be sent through the signaling channel. When the subscriber desires to make modifications in the application 110, the request may be sent through a web browser 103 in the form of a short message to the SMSC 107. The SMSC 107 stores the request and then forwards the request to the SMS-GMSC 108. SMS-GMSC 108 sends the request to the mobile device 109 for any modification in the application 110. For example, a subscriber A may want to restrict people accessing information about the location when he is at home. In such a case, he can modify the application 110 accordingly to provide access to only preferred subscribers.

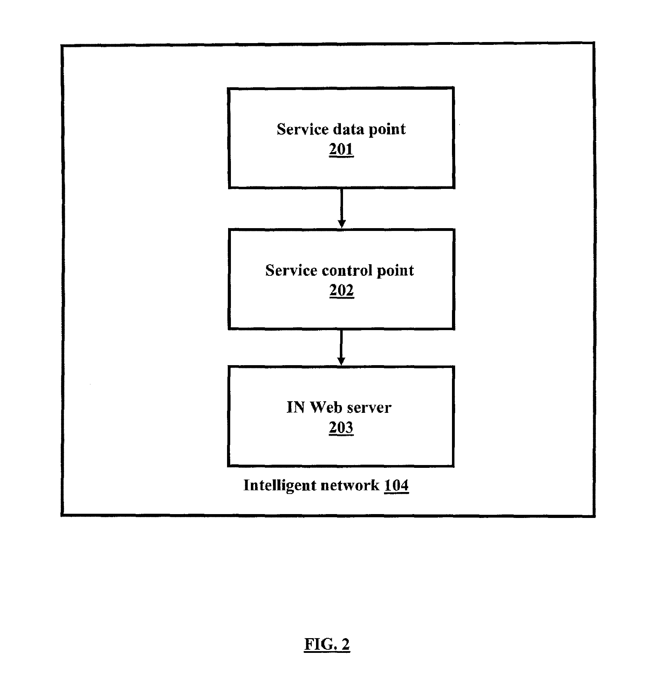

FIG. 2 illustrates an intelligent network, according to embodiments as disclosed herein. The intelligent network comprises a Service Data Point (SDP) 201, Service Control Point (SCP) 202 and an IN server 203. The IN 104 handles the requests made by authorized persons. The authorized person makes a request for location based information through the web browser 103. The web browser 103 routes the request to the IN 104 through the web server 102. IN 104 performs data collection and charging related functions. GPS data of tracked location is routed to the IN 104 through the HLR 105. In the IN 104, transmitted data is saved and a confirmation message for successful completion of the operation is sent to the application 110.

Service data point (SDP) 201 is a database that contains data regarding registration, or other data required to process a call or session and the like. For example, mobile device users prepaid credit, which is remaining may be an item stored in the SDP 201 to be queried in real time during the call. The SDP 201 may be a separate platform, or is sometimes co-located with the SCP 202.

The IN Web server 203 is located within the IN 104. The IN Web server 203 handles sending and receiving of XML requests. The IN Web server 203 acts as a trigger point for invoking the operations on receiving XML requests.

Service Control Point (SCP) 202 is a separate set of platforms that receive queries from other modules. The SCP 202 contains service logic, which implements the behaviors desired by the operator, i.e., the services. During service logic processing, additional data required to process the call may be obtained from the SDP 201. The logic on the SCP 202 is created using the Service Creation Environment (SCE).

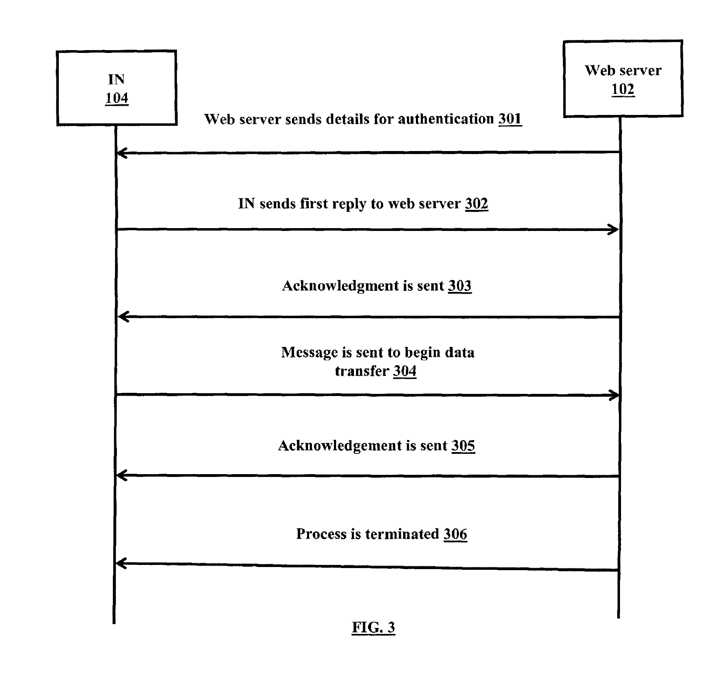

FIG. 3 is a flow diagram illustrating the call flow between IN and web server, according to embodiments as disclosed herein. The application 110 reads the GPS data and transmits the data in the form of USSD string. The data is routed to the IN 104 through the HLR 105. The IN 104 saves the transmitted data and sends a confirmation message as an acknowledgment to the application 110.

The authorized person makes a request for location based information on the web server 103. In order to obtain the location information stored on the IN 104, the web server 102 sends (301) a request message to the IN 104. The request message may contain details for authentication. Details such as trackemame, password, tracker_id, application and the mode of operation may be sent in the request message. Trackername field is used to identify and authenticate the source sending the XML data. Both web server 202 and IN 104 use the trackername field for authentication purposes. The web server account and SIM card account should be present on the IN 104. Tracker_id identifies the user of the mobile device whose information is being tracked or communicated. Application field helps to identify the type of request and process the request on the IN 104. Mode field indicates if the data is required in real time or only when requested by the authorized person.

In response to the request message, the IN 104 sends (302) a first reply. The first reply may contain details like data sno, tracker_id, transaction_id, trackemame and password. Data sno indicates the actual size of the data: serial no 'sno' and 'timestamp' indicate the time at which co-ordinates are also transmitted. The number of data sno tags transmitted may be variable and depends on the amount of data that has to be transmitted in one go. In cases where large amount of data is involved, the data sno reduces number of messages required during first communication between IN 104 and web server 102. Transaction _id is used to distinguish between different call contexts of an authorized person If the data is sent in real time, authentication and tracker_id are only required in the first request. In rest of the transactions only transaction_id is required, since the transaction_id is a unique number generated by IN 104 and is valid until the time the call in context is present on IN 104. The first reply may also comprise of data stored in the web server since the last access by the authorized person.

The web server 102 sends (303) an acknowledgment to IN 104. The acknowledgment message may be provided with details such as transaction_id, application and mode.

The IN 104 then sends (304) a second message to begin data transfer. The message may include details like data sno, transaction_id, and data to be transmitted.

In response to the second message the web server 102 sends (305) an acknowledgment to the IN 104. The acknowledgment message contains details like transaction_id, application and mode. The process continues until the data transfer is completed.

On completion of the data transfer process, a termination message is sent (306) to the IN 104. The termination message contains transaction_id, application and mode details.

If the flag for real time updates has been set, then the IN 104 will send updates to the authorized person, on receiving location updates from the user. The flag for real time updates may be set by the authorized person or by the user.

In an embodiment, consider the information on altitude, time; speed etc is need to be tracked for a particular mobile device user. GPS devices use various protocols such as National Marine Electronics Association (NMEA) and the like. NMEA protocol is used only for illustrative purposes and not intended to limit the scope of embodiment to usage of only NMEA protocol. The request message is sent in the form of protocol sentences in a USSD string format. For example, a USSD string may be of the form: *123*GGA,123519,4807.038,N,01131.324,E,1,08,0.9,545.4,M,46.9,M, , *42#. Where 123519 indicates that the fix taken at 12:35:19 UTC; 4807.038 N indicates Latitude 48 deg 07.038' N; 01131.324, E indicates Longitude 11 deg 31.324' E; 1 Fix quality: 0 = invalid; 1 = GPS fix; 2 = DGPS fix; 08 indicates number of satellites being tracked and 0.9 Horizontal dilution of position. Further, 545.4 M indicates Altitude in meters, above mean sea level. 46.9 M indicates height of geoid (mean sea level) above WGS84 ellipsoid. A first empty field indicates time in seconds since last DGPS update and second empty field indicates DGPS station ID number. 42 indicate checksum.

The USSD string can be sent by the mobile device 109 by using modem commands. When data part of the USSD string reaches application on web server, data part is decoded in accordance to the format of sentence. This string is routed to SCP/IN by HLR. In absence of GPS data, cell information can be used to update the location of cell phone.

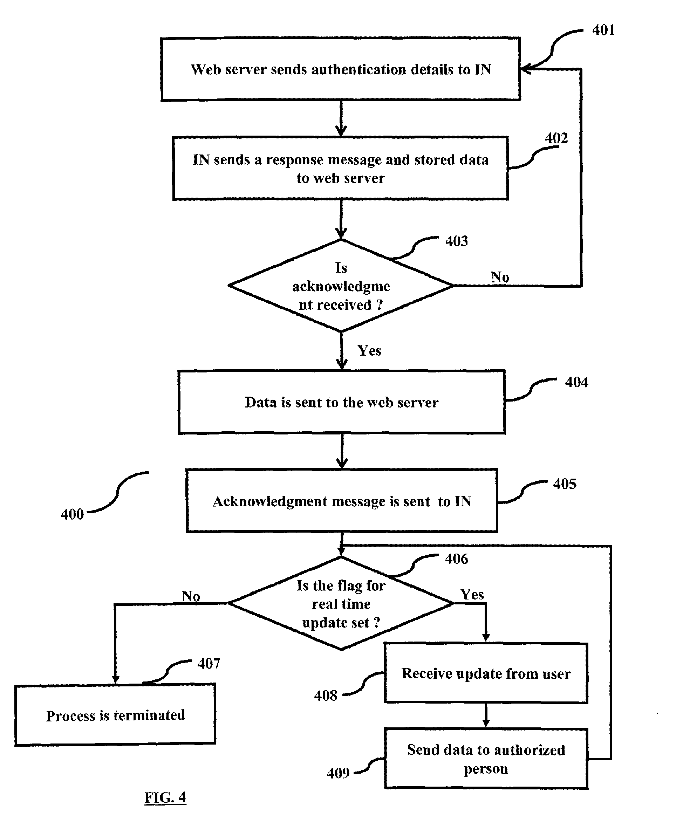

FIG. 4 is a flow chart depicting the call flow between IN and web server, according to embodiments as disclosed herein. The authorized person sends a request through a web browser 103 to obtain location information. The request is routed to the IN 104 by the web browser 103. The web server 102 sends (401) a request message to the IN 104 along with authentication details. Authentication details may include trackername, password, tracker_id, application and mode. Trackername and password are mainly used for authentication purposes Tracker_id identifies the user of the mobile device whose location is being tracked. Application tag helps to identify the type of request and application that will process the request on the IN 104. Mode indicates if the data is sent to the authorized person in real time or stored on the IN 104. The IN 104 on receiving the request message authenticates and identifies the user of the mobile device. Further, the IN 104 sends (402) a response message along with any data stored in the web server since the last access by the authorized person to the web server 102. The response message is the first reply message sent to the web server 103 by the IN 104. The reply message may include details such as data sno, tracker_id, transaction_id, trackemame and password. Further, a check (403) is made if an acknowledgment is sent by the web server 102. In case the web server does not send the acknowledgment within a predetermined time, the web server 102 may again send the request message to the IN 104 along with details for authentication. On the other hand if the web server 102 sends an acknowledgment, data transfer session is established. The IN 104 sends (404) the data to the web server 102. The message includes transaction_id and details of the location. The web server 102 (405) sends an acknowledgment to the IN 104 on receiving the data. The acknowledgment message also includes details such as transaction_id, application and mode of the subscriber. The process of data transfer continues until the required information is transmitted to the web server 102. The data indicates the location of the subscriber, time at which he may be present at the location and the like. The IN 104 further checks (406) if the flag for real time updates has been set. If the flag for real time updates has been set, then the IN 104 on receiving (408) an update with regards to the location from the user sends (409) the update to the authorized person. If the flag for real time updates has not been set, an acknowledgment message along with transaction_id, application and mode details is sent (407) to the IN 104 indicating termination of the session. The process is then terminated. The various actions in method 400 may be performed in the order presented, in a different order or simultaneously. Further, in some embodiments, some actions listed in FIG. 4 may be omitted.

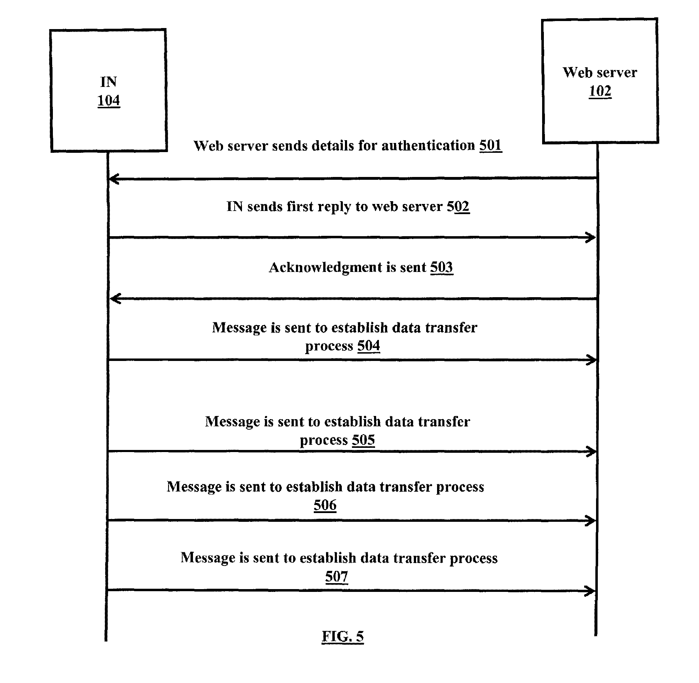

FIG. 5 is a flow diagram illustrating time out call flow between IN and web server, according to embodiments as disclosed herein. To obtain location based information, the authorized person sends (501) a message to the IN 104. The message is a request message including details for authentication to check if the person has access to the location information. The request message may include trackemame, password, tracker_id, application and the mode. Mode indicates if the location data is required in real time or only when requested by the authorized person. In case the user is visible to the network, his mode is termed as online, else he is in offline mode. If the user is online and the authorized person makes a request for location data, a flag is set on the IN 104 indicating the data can be directly transferred instead of saving the data in the database. On receiving the request message, the IN 104 authenticates the authorized person and establishes the session for data transfer. An acknowledgment message and data stored in the web server since the last access by the authorized person may be sent (502) to the web server 102 with information on transaction_id, data sno, trackemame and password. On receiving the acknowledgment, the IN 104 sends (503) a second reply to the web server 102 to establish data transfer session. Further, the IN 104 waits for an acknowledgment from the web server 102. If the acknowledgment is not received by the IN 104 within a specified period of time, a time out may occur on the IN 104 and XML post is set again. Further, a message is sent (504) to the web server 102 to establish data transfer process. The process is repeated (505, 506, 507) further for three trails consecutively. If after three trails, no reply is received in response to the message, the connection is assumed to be broken i.e. the user of the mobile device is assumed to be in offline mode. The flag that indicates online presence of the user is unset. The mode is set to 0 and no more data transmission takes place in real time. In an embodiment, the flag is unset when the web server 102 requests IN 104 to change the mode of operation to offline. The case usually happens in low traffic hours, when all the data collected during the day is transferred to the web server 102 to clear IN 104 database and keep the data on the web server 102 updated.

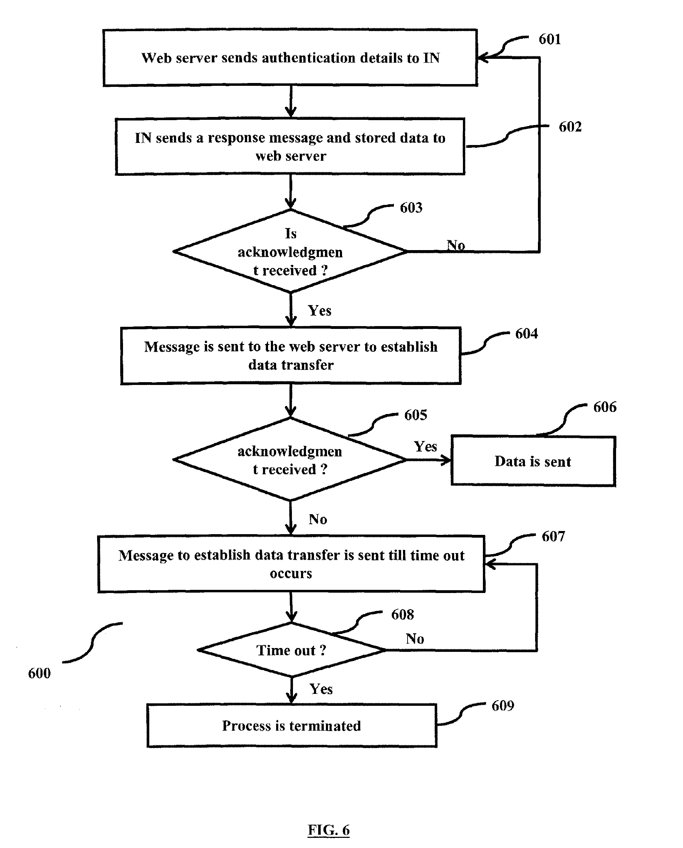

FIG. 6 is a flow chart depicting the time out call flow between IN and web server, according to embodiments as disclosed herein. The web server sends (601) a request message to IN 104 requesting for location related data. The request message may contain details for authentication such as trackemame, password, tracker_id, application and mode of the user of the mobile device. The IN 104 on receiving a request message sends (602) a reply message as acknowledgment along with data stored in the web server since the last access by the authorized person to the web server 102. The reply message may include details such as data sno, tracker_id, transaction_id, trackemame and password. A check (603) is made if the IN 104 receives an acknowledgment from the web server 102 for the reply message sent by the web server 102. In case the acknowledgment is not sent, web server 102 resends the request and waits for time out of the session. On the other hand, if the acknowledgment is received by the IN 104, data transfer session is established. The data related to location information stored on the IN 104 is sent (604) to the web server. Further, a check (605) is made by IN 104 for the acknowledgment message. In case the acknowledgment is sent (606) data transfer process is continued. If the acknowledgment message is not received, a response message is sent (607) to the web server 102 to trigger the session to continue data transfer. The trigger message is sent until time out occurs (608). In case of time out, the process is terminated (609). The various actions in method 600 may be performed in the order presented, in a different order or simultaneously. Further, in some embodiments, some actions listed in FIG. 6 may be omitted.

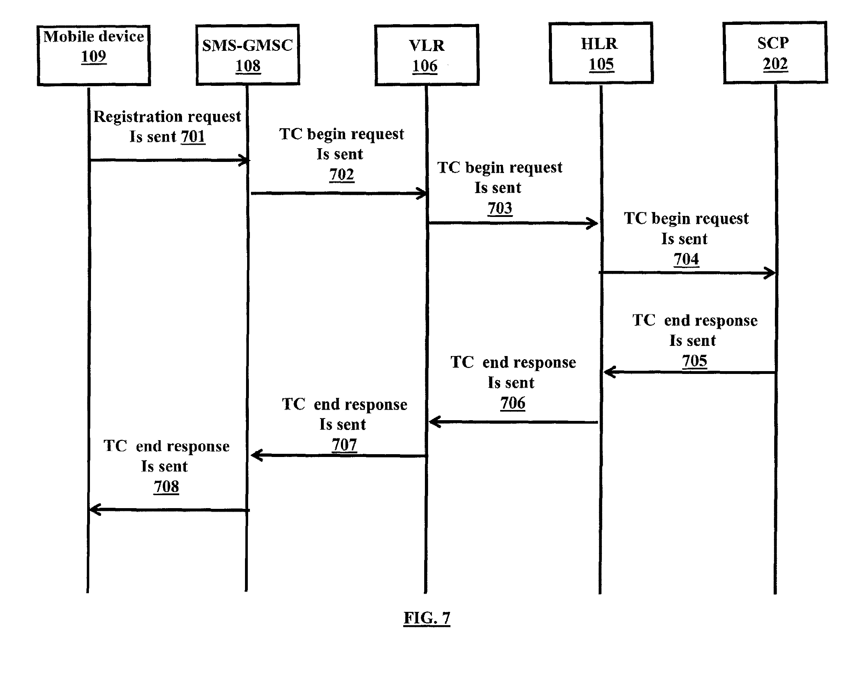

FIG. 7 is a flow diagram illustrating the sequence of events between the network and IN, according to embodiments as disclosed herein. In an embodiment, the method makes use of USSD, which is a session based service in which messages are used to set-up, manage and release the sessions. Location related data is carried to the IN 104 by session initialization messages and acknowledgment is provided to Mobile device 109 through session termination message. The mobile device 109 sends (701) a request to the SMS-GMSC 108 for registration. The registration message is sent to establish the start of the session between the mobile device 109 and network. The registration message may contain service code and unstructured SS request. The SMS-GMSC 108 on receiving registration message sends (702) a message to the VLR 106. The message is sent in the form of a session initiation message. Session initiation message may be TC_begin and the like. Session initiation message performs session initialization between different network entities connecting through interfaces. The session initiation message includes details regarding the service code and location information. The VLR 106 sends (703) the session initiation message to the HLR 105. The session initiation message contains details regarding service code and location information. The HLR 105 provides details regarding the location of the subscriber and forwards the message. The session initiation message is then sent (704) to SCP 202. On receiving the session initiation message, the SCP 202 is invoked. The SCP 202 contains service logic, which implements the behavior desired by the operator, i.e., the services. During service logic processing, additional data required to process the call may be obtained from the SDP 201. Further, the SCP 202 sends (705) a response message to HLR 105 in response to the request. The response message may be a session termination message. In an embodiment, TC_end may be session termination message to terminate the session. Session termination message is then sent (706) to the VLR 106 by the HLR 105. The session termination contains details regarding unstructured SS request. The VLR 106 forwards (707) the session termination message to the SMS-GMSC 108. Further the SMS-GMSC 108 sends (708) a message to Mobile device 108 to release the session. Release is required as session initiation occupies resources at various network entities and that of mobile device. The process releases all the occupied resources and provides positive or negative acknowledgement of the operation. The traffic channel is released when positive or negative acknowledgment is sent by the IN 104 or any other intermediate network elements or in case of time out. The application 110 is then notified as to whether the session was successful or not. The application may try to re-send the data at some other time.

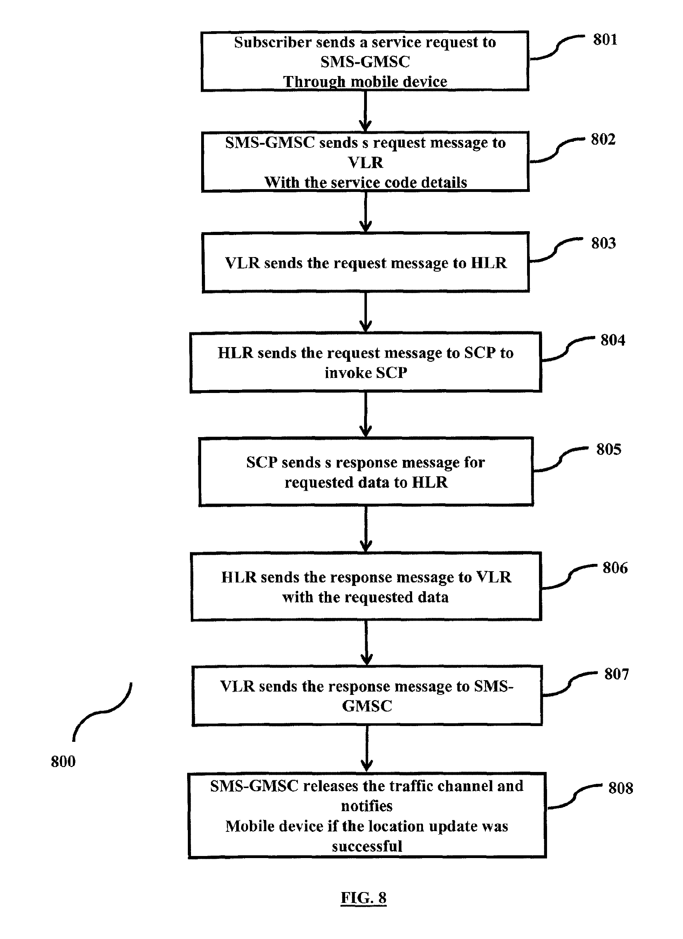

FIG. 8 is a flow chart depicting sequence of events between network and IN, according to embodiments as disclosed herein. The subscriber makes a request for location information through a web browser 103. Mobile device sends (801) a request message to SMS-GMSC 108 for registration. The registration message may include details such as the service code, unstructured SS request and the like. The registration message is sent to establish the start of the session between the mobile device 109 and network. The SMS-GMSC 108 on receiving registration message sends (802) a request message to the VLR 106. The request message is a session initiation message. Session initiation message may be a TC_begin message and the like. Session initiation message performs session initialization between different network entities connecting through MAP interfaces. The session initiation message includes details regarding the service code and location information. The VLR 106 sends (803) the session initiation message to the HLR 105. The message contains details regarding service code and location information. The HLR 105 provides details regarding the location of the subscriber and forwards the message. The session initiation message is then sent (804) to SCP 202. On receiving the session initiation message, SCP 202 is invoked. The SCP 202 contains service logic, which implements the behavior desired by the operator, i.e., the services. During service logic processing, additional data required to process the call may be obtained from the SDF. On receiving the session initiation message, the SCP 202 sends (805) a response message to HLR 105 in response to the request to establish the session. The response message may be TC_end, which is a session termination message. Session termination message is then sent (806) to the VLR 106 by the HLR 105. The session termination message may contain details such as details regarding unstructured SS request. The VLR 106 forwards (807) the session termination message to SMS-GMSC 108. The SMS-GMSC 108 further sends (808) a message to mobile device 109 to release the session. The traffic channel is released when positive or negative acknowledgment is sent by IN 104 or any other intermediate network elements or in case of time out. The application 110 is then notified as to whether the session was successful or not. The application 110 may try to re-send the data at some later point of time. The various actions in method 800 may be performed in the order presented, in a different order or simultaneously. Further, in some embodiments, some actions listed in FIG. 8 may be omitted.

According to embodiments disclosed herein, if the user of the mobile device whose location is tracked is not registered for roaming service, the user of the mobile device can still be tracked when he is on roaming, and location details can be updated and displayed. The tracking is made possible as the method uses USSD service, and USSD request are routed to home HLR. As a result, location based information can be routed to IN, and may be sent to web server to display the location data to the authorized user making a request. In addition, different websites can also register with the IN to use the tracking based location information.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams and the like represent various processes which may be substantially represented in computer readable medium and so executed by a computer or processor, whether or not such computer or processor is explicitly shown.

## Claims

1. A method for a mobile device to send tracking information to a mobile network, said method comprising of said mobile device sending location information of said mobile device to said mobile network using a signaling channel between said mobile device and said mobile network.

2. The method, as claimed in claim 1, wherein said mobile device uses Global System for Mobile Communications (GSM).

3. The method, as claimed in claim 1, wherein said signaling channel uses Unstructured Supplementary Service Data (USSD).

4. The method, as claimed in claim 1, wherein said location information comprises of latitude of location of said mobile device; and
longitude of location of said mobile device.

5. A method for performing real-time tracking of a mobile device in a telecommunications network, said method comprising steps of
said mobile device sending location information of said mobile device to a mobile network using a signaling channel between said mobile device and said mobile network.;
said network sending said location information to a server; and
a user accessing said location information from said server.

6. The method, as claimed in claim 5, wherein said mobile device uses Global System for Mobile Communications (GSM).

7. The method, as claimed in claim 5, wherein said signaling channel uses Unstructured Supplementary Service Data (USSD).

8. The method, as claimed in claim 5, wherein said server is an Intelligent Network (IN) server.

9. The method, as claimed in claim 5, wherein said user is authorized by user of said mobile device to access said location information.

10. The method, as claimed in claim 5, wherein said user accesses said location information using a web browser.

11. The method, as claimed in claim 5, wherein said location information comprises of latitude of location of said mobile device; and
longitude of location of said mobile device.

12. A mobile device for sending location information to a mobile network, said mobile device comprising of atleast one means adapted for sending said location information to said mobile network using a signaling channel between said mobile device and said mobile network.

13. The mobile device, as claimed in claim 12, wherein said mobile device is adapted to use Unstructured Supplementary Service Data (USSD) to send said location information.

14. A system for performing real-time tracking of a mobile device in a telecommunications network, said system comprising of atleast one means adapted for
sending location information of said mobile device to said network using a real-time interactive communication means;
storing said location information in a server; and
accessing said location information from said server.

15. The system, as claimed in claim 14, wherein said mobile device is adapted to use Unstructured Supplementary Service Data (USSD) to send said location information.
